# FASCICULE DE BREVET EUROPEEN

(11) **EP 3 495 977 B1**
(45) Date de publication et mention de la délivrance du brevet: **18.05.2022**
(21) Numéro de dépôt: 18210861.3
(22) Date de dépôt: 06.12.2018
(51) Int. Cl.: G06F 21/44, G06F 21/56, G06F 21/85

(54) **SYSTÈME ET PROCÉDÉ DE PROTECTION D'UN SYSTÈME INFORMATIQUE**
SYSTEM UND VERFAHREN ZUM SCHUTZ EINES INFORMATIONSSYSTEMS
SYSTEM AND METHOD FOR PROTECTING AN INFORMATION SYSTEM

(30) Priorité: 07.12.2017 FR 1701282
(43) Date de publication de la demande: 12.06.2019
(73) Titulaire: Thales, 92400 Courbevoie (FR)
(72) Inventeur: LENORMAND, Sébastien, 92622 Gennevilliers (FR); FRANCILLON, Olivier, 92622 Gennevilliers (FR); LENORMAND, Séverine, 92622 Gennevilliers (FR); BRUGEAS, Antoine, 92622 Gennevilliers (FR); PEREZ, Frédéric, 92622 Gennevilliers (FR)
(74) Mandataire: Lavoix

(56) Documents cités:
- CA-A1- 2 989 064
- FR-A1- 2 949 888
- US-A1- 2009 100 521
- US-A1- 2011 088 093

## Description

La présente invention concerne un système et un procédé de protection d'un système informatique comportant au moins un connecteur permettant la connexion d'un dispositif de stockage de données portable externe.

L'invention se situe dans le domaine de la sécurité des systèmes informatiques.

L'utilisation de dispositifs de stockage de données portables, amovibles, adaptés à être connectés à un terminal d'utilisateur, et plus généralement à un système informatique, via une connexion de type Universal Serial Bus ou USB, est de plus en plus courante, y compris dans le domaine de l'entreprise et dans le domaine industriel.

De manière connue, la norme USB (en français Bus Universel Série) est une norme relative à une transmission série de données par un bus informatique, servant à connecter un dispositif périphérique à un système informatique de tout type prévu à cet effet (ordinateur, tablette, smartphone).

Il est fréquent d'utiliser ce type de dispositif de stockage de données portable, notamment des clés USB, pour transférer des données de manière bi-directionnelle entre des systèmes informatiques de niveaux de sécurité différents.

Or il est connu qu'il existe des logiciels malveillants qui ont pour objectif de gêner ou bloquer le fonctionnement des systèmes informatiques hôtes ou des logiciels espions qui ont pour but de copier des données confidentielles stockées sur un système informatique hôte. Il s'agit par exemple de logiciels connus sous les noms de virus, malware, rançonware.

L'introduction de tels logiciels malveillants est totalement indésirable sur tout type de système informatique, à la fois sur un terminal d'utilisateur personnel et sur un terminal d'utilisateur connecté à un réseau d'entreprise. Dans ce deuxième cas, l'introduction d'un logiciel malveillant est particulièrement critique par rapport à la sécurité des données de l'entreprise.

De manière classique, un terminal d'utilisateur comporte un ou plusieurs connecteurs (ou ports USB) permettant de connecter un dispositif compatible, par exemple une clé USB, directement au terminal d'utilisateur, un tel dispositif pouvant être porteur de logiciels malveillants.

Le document CA 2 989 064 A1 décrit un système de protection d'un système d'informatique de l'introduction d'éventuels virus ou « malware » par un système périphérique connectable au système informatique.

Outre les attaques par l'intermédiaire de logiciels malveillants, il peut être envisagé qu'un dispositif portable ayant des capacités de connexion de type USB soit prévu pour réaliser une attaque physique, par exemple via une décharge électrique, du système informatique hôte.

Il est nécessaire de mettre en place des systèmes de sécurisation afin d'empêcher toute attaque, physique ou logicielle, par l'intermédiaire d'un dispositif de stockage portable.

A cet effet, l'invention propose, selon un premier aspect, un système de protection d'un système informatique selon la revendication 1.

Avantageusement, la présence d'un premier équipement adapté à recevoir le dispositif de stockage portable et d'un deuxième équipement connecté au système informatique, séparés physiquement et adaptés à communiquer entre eux selon un mode de communication radio, permet de protéger le système informatique à la fois des menaces physiques et des menaces logicielles.

Avantageusement, le système proposé permet d'isoler, à la fois pour le matériel et le logiciel, les éventuels dispositifs de stockage portables infectés.

Le système de protection selon l'invention peut présenter une ou plusieurs des caractéristiques récitées dans les revendications dépendantes 2 à 5, prises indépendamment ou en combinaison, selon toutes les combinaisons techniquement acceptables.

Selon un deuxième aspect, l'invention concerne un procédé de protection d'un système informatique conforme à la revendication 6.

Le procédé de protection selon l'invention peut présenter une ou plusieurs des caractéristiques récitées dans les revendications 7 à 10, prises indépendamment ou en combinaison, selon toutes les combinaisons techniquement acceptables.

D'autres caractéristiques et avantages de l'invention ressortiront de la description qui en est donnée ci-dessous, à titre indicatif et nullement limitatif, en référence aux figures annexées, parmi lesquelles :
- la figure 1 est un exemple schématique d'un système de protection selon un mode de réalisation dans un contexte d'utilisation ;
- la figure 2 est une illustration schématique des blocs fonctionnels des premier et deuxième équipements d'un système de protection selon un premier mode de réalisation ;
- la figure 3 est une illustration schématique des blocs fonctionnels d'un système de protection selon un deuxième mode de réalisation ;
- la figure 4 est un logigramme des principales étapes d'un procédé de protection selon un mode de réalisation de l'invention.

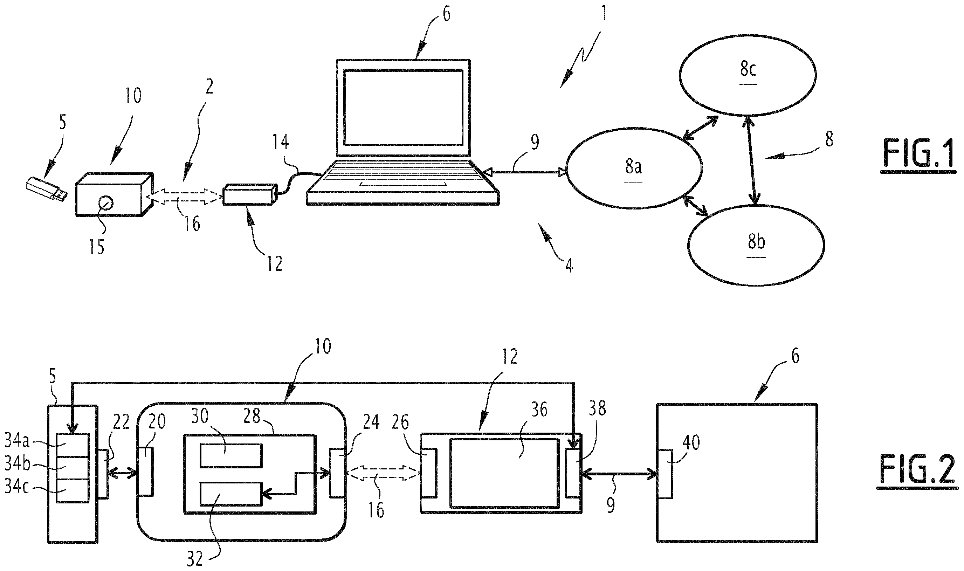

La figure 1 illustre un système de protection d'un système informatique dans un contexte d'utilisation.

Le système global 1 décrit ici à titre d'exemple comporte un système de protection 2 d'un système informatique 4 par rapport à tout type d'attaque en provenance d'un dispositif de stockage de données portable externe 5.

Le dispositif externe 5 est dans cet exemple une clé USB adaptée à être connectée de manière connue, via un connecteur USB à tout système informatique comportant un connecteur USB ou port USB adéquat.

Le système informatique 4 de l'exemple de la figure 1 comprend un terminal d'utilisateur 6, par exemple un ordinateur personnel (PC) portable, connecté à un réseau de communication 8, qui est par exemple un réseau d'entreprise auquel sont connectés divers autres sous-systèmes informatiques 8a, 8b, 8c.

On entend ici par système informatique tout matériel informatique, qu'il s'agisse d'un terminal seul ou d'un système comportant une pluralité de terminaux adaptés à communiquer selon un protocole de communications connu. Un sous-système informatique est une partie d'un système informatique.

Par exemple, le terminal d'utilisateur 6 est connecté au réseau 8 par une connexion filaire 9 de type Ethernet. Bien entendu, il s'agit d'un exemple non limitatif. En variante, le terminal d'utilisateur 6 est connecté au réseau par une connexion sans fil.

Le système de protection 2 selon un mode de réalisation de l'invention comporte un premier équipement 10 de sécurité et un deuxième équipement 12 de sécurité, qui sont tous deux de type portable, donc comportant chacun un boîtier de taille réduite. Par exemple, le deuxième équipement a une taille similaire à la taille d'une clé USB.

De préférence, le premier équipement 10 comporte un boîtier, par exemple parallélépipédique de taille de l'ordre de de 10 cm * 5cm * 1 cm.

Le deuxième équipement 12 est adapté à être connecté au terminal d'utilisateur 6 par câble USB 14, comme illustré à la figure 1. En variante, le deuxième équipement 12 comporte un connecteur USB, non représenté à la figure 1, adapté à être connecté directement dans un connecteur USB complémentaire du terminal d'utilisateur 6.

Le premier équipement 10 est adapté à communiquer avec le deuxième équipement 12 par un canal radio 16.

Des modules fonctionnels de ces divers éléments sont illustrés schématiquement à la figure 2.

Le premier équipement 10 comprend un connecteur d'entrée 20, adapté à recevoir un connecteur 22 du dispositif de stockage 5.

Le boîtier du premier équipement comprend, dans le mode de réalisation de la figure 1, un indicateur lumineux 15, par exemple une diode électroluminescente, qui permet d'indiquer visuellement à l'utilisateur, lorsqu'il branche un dispositif de stockage 5, si la vérification des données stockées est positive ou négative. Par exemple, l'indicateur 15 est allumé en vert lorsque la vérification est positive, et en rouge lorsque la vérification est négative.

Bien entendu, en variante, il est possible d'envisager de positionner deux ou plusieurs indicateurs lumineux distincts, qui s'allument partiellement en fonction du résultat de la vérification. En variante ou en complément, il est possible de positionner des indicateur textuels (par exemple « scanning in progress », « scan OK », « scan KO »). En variante ou en complément, il est possible de positionner des indicateurs graphiques (IHM).

Le premier équipement 10 comprend également un premier module de communication sans fil 24, par exemple un module émetteur/récepteur WiFi, permettant de communiquer avec un deuxième module de communication sans fil 26 du deuxième équipement 12, adapté à utiliser le même protocole de communication sans fil que le module 24, par exemple WiFi.

En variante, d'autres protocoles de communication sans fil sont envisagés, par exemple Bluetooth.

Le premier équipement 10 comprend également un processeur 28, adapté à mettre en oeuvre un module 30 de vérification de sécurité des données et un module 32 adapté à générer un rapport de vérification qui est transmis, par l'intermédiaire du premier module de communication sans fil 24, au deuxième équipement 12.

Ainsi, lors de l'insertion du dispositif de stockage de données portable 5 dans le premier équipement 10, le module 30 de vérification de sécurité des données met en oeuvre au moins un logiciel de vérification, couramment appelé logiciel anti-virus, permettant de vérifier si les données 34a, 34b, 34c stockées sur le dispositif de stockage portable 5 sont ou non infectées par des instructions de code malveillant.

Tout type de logiciel connu de type antivirus, antimalware ou antispyware peut être mis en œuvre par le module 30 de vérification de sécurité.

Le deuxième équipement 12 comporte également un processeur 36 et un connecteur de sortie 38, de type USB, adapté à être connectée à un connecteur correspondant 40 du terminal d'utilisateur 6.

Si le module 30 de vérification de sécurité des données valide les données contenues dans le dispositif de stockage 5 comme étant intègres, un accès aux données est fourni au terminal d'utilisateur 6.

Un utilisateur ou une application du terminal d'utilisateur 6 peut alors accéder aux données 34a, 34b, 34c du dispositif de stockage 5 de manière transparente, comme si le dispositif de stockage 5 était directement branché sur le connecteur USB 40. Cette transparence est par exemple réalisée au travers d'un protocole spécifique d'accès à distance au matériel connecté. Un exemple de protocole pouvant être utilisé est le protocole NBD (pour « Network Block Device » en anglais).

De plus le rapport de vérification généré, qui est positif dans ce cas, est également transmis au terminal d'utilisateur 6.

Si le module 30 de vérification de sécurité des données détecte la présence ou le risque de présence de code malveillant dans les données contenues dans le dispositif de stockage 5, aucun accès aux données n'est transmis au terminal d'utilisateur 6. Seul le rapport de vérification généré, qui est négatif dans ce cas, est transmis au terminal d'utilisateur 6. En effet, un tel rapport contient par exemple des informations sur le type de code malveillant détecté, ce qui permet d'effectuer une analyse plus générale par rapport au type d'attaque constaté.

De préférence, chacun des premier équipement 10 et deuxième équipement 12 est implémenté par un système intégré SoC (pour « System on Chip »), qui intègre les fonctionnalités de calcul, de mémoire, de communication sur un même substrat. Par exemple, un processeur Raspberry Pi ^{®} est utilisé.

Avantageusement, un tel système est miniature, peu coûteux et facilement transportable, et comprend un microcontrôleur ayant suffisamment de puissance de calcul pour effectuer toutes les opérations à effectuer par un procédé de protection d'un système informatique tel que décrit.

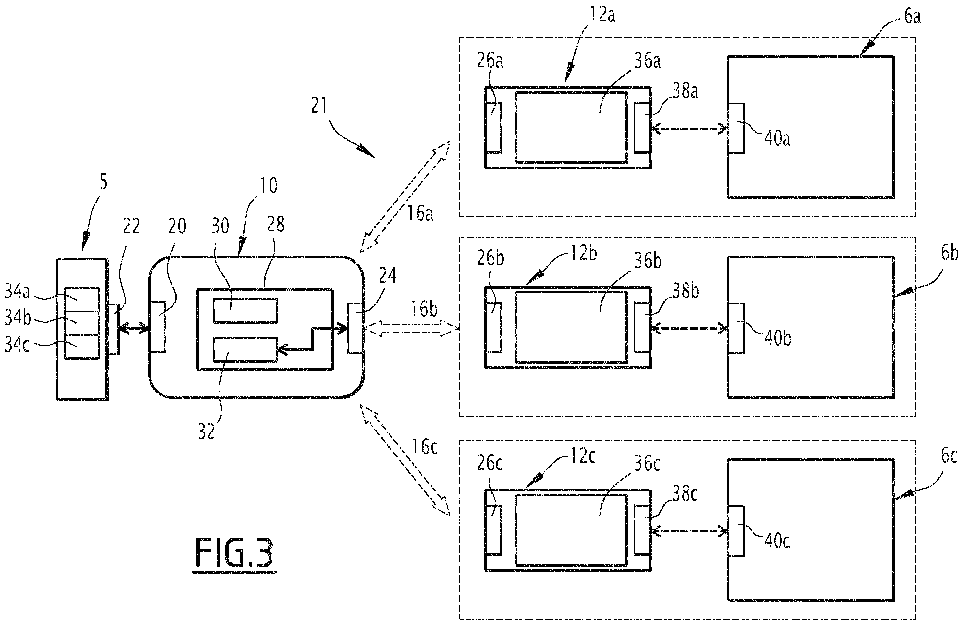

La figure 3 illustre un autre mode de réalisation d'un système de protection 21, comprenant un premier équipement 10, tel que décrit précédemment, et une pluralité de deuxièmes équipements 12a, 12b, 12c, analogues au deuxième équipement 12 décrit précédemment. Les modules fonctionnels des deuxièmes équipements sont analogues à ceux de la figure 2, et portent des références analogues sur la figure 3.

Chaque deuxième équipement 6a, 6b, 6c est adapté à communiquer avec le premier équipement 10 par un canal radio 16a, 16b, 16c.

Un tel système de protection 21 est avantageusement utilisable pour partager des données 34a, 34b, 34c, après validation par le module 30 de vérification de sécurité, entre plusieurs terminaux utilisateurs 6a, 6b, 6c, comportant chacun un connecteur USB 40a, 40b, 40c adapté à recevoir une connexion avec le deuxième équipement 12a, 12b, 12c..

Un tel partage est par exemple utile dans une situation de réunion de travail entre divers intervenants, par exemple pour partager des données fournies par un prestataire extérieur à l'entreprise en toute sécurité.

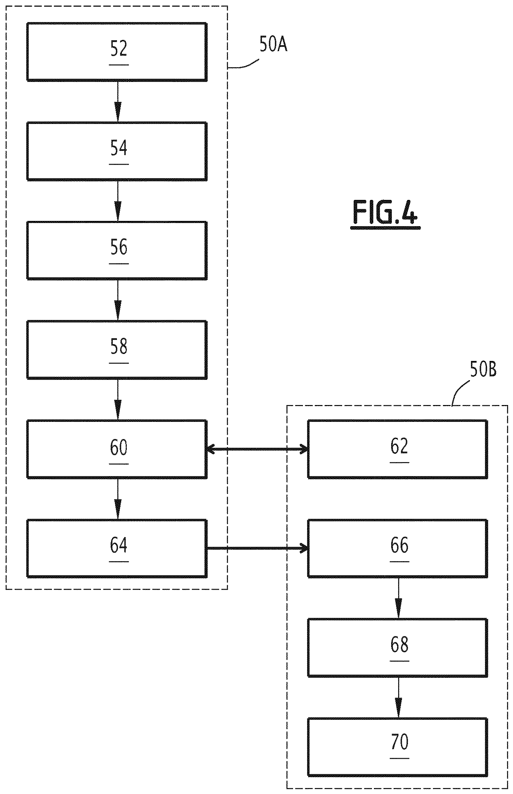

La figure 4 est un synoptique des principales étapes d'un procédé de protection d'un système informatique selon un mode de réalisation.

L'ensemble 50A des étapes du procédé est mis en œuvre sur le premier équipement, et l'ensemble 50B des étapes est mis en œuvre par le deuxième équipement.

Sur le premier équipement, lors d'une première étape 52, la connexion d'un dispositif de stockage 5 externe sur le connecteur 20 du premier équipement est détectée.

Ensuite, une étape 54 de vérification de sécurité des données est mise en œuvre, suivie d'une étape 56 de génération ou mise à jour d'un rapport de vérification.

Tout logiciel de vérification de type anti-virus, anti-malware, anti-spyware peut être mis en œuvre à l'étape 54.

De préférence, les étapes 54 et 56 sont répétées, de manière à cumuler les vérifications par mise en œuvre de plusieurs logiciels de vérification de la sécurité des données permettant de détecter une éventuelle tentative d'introduction de code malveillant, le rapport de vérification étant mis à jour à chaque vérification.

De tels logiciels sont connus, et tout logiciel existant peut être utilisé.

En variante, le logiciel de vérification est un logiciel propriétaire, mettant en œuvre des contrôles spécifiques, par exemple la vérification des formats de fichier lorsque seul un nombre restreint de formats de fichier est autorisé dans un réseau d'entreprise.

Pour chaque tel logiciel, il est vérifié si le résultat de la vérification est positif ou négatif. Dès qu'un des logiciels de vérification génère un résultat négatif, on considère que les données 34a, 34b, 34c sont infectées et que le système informatique doit être protégé par rapport à ces données.

Par exemple, en cas de résultat de vérification négatif, le rapport de vérification comporte des informations horodatées, par exemple le nom du dispositif portable 5 vérifié, le ou les noms des fichiers infectés, des informations afférentes au logiciel de vérification mis en œuvre, et éventuellement le nom du virus détecté.

Si le résultat de la vérification est positif, le rapport de vérification comporte par exemple les informations horodatées suivantes : nom du dispositif portable 5 vérifié, mention indiquant que le dispositif est considéré non infecté, des informations afférentes au logiciel de vérification mis en œuvre.

Optionnellement, l'étape 56 est suivie d'une étape 58 de commande d'indicateur lumineux ou textuel permettant d'indiquer visuellement à un utilisateur le résultat positif ou négatif de la vérification. Par exemple, un indicateur lumineux de couleur verte est allumé en cas de résultat positif, et un indicateur lumineux de couleur rouge est allumé en cas de résultat négatif. Par exemple, l'indicateur textuel est un texte affiché, par exemple « OK » en cas de résultat positif, et « Not OK » en cas de résultat négatif. Bien entendu, de nombreuses variantes d'indicateurs lumineux ou textuels sont envisageables.

Selon une variante, une commande d'allumage d'indicateurs est effectuée en parallèle de la mise en œuvre des vérifications de sécurité, par exemple en commandant un clignotement des indicateurs lumineux durant la phase de vérification, puis un allumage cohérent et figé, comme expliqué ci-dessus, en fonction du résultat.

Le premier équipement est adapté à communiquer avec le deuxième équipement par radio.

Pour ce faire, un canal de communication est établi par des échanges 60, 62 mis en œuvre respectivement par le premier équipement et par le deuxième équipement.

Plusieurs échanges selon un protocole de communication prédéterminé, par exemple le protocole WiFi, sont effectués, ce qui est schématiquement symbolisé par la flèche bi-directionnelle représentée sur la figure 4.

Il est à noter que les étapes d'établissement d'un canal de communication radio 60 et 62 peuvent également être réalisées, en variante, préalablement à la détection de l'introduction d'un dispositif portable 5 dans le premier équipement.

De préférence, l'établissement d'un canal de communication comprend un appariement des premier et deuxième équipements.

Par exemple, le premier équipement mémorise un ensemble d'identifiants uniques IDᵢ de deuxièmes équipements autorisés, cet ensemble pouvant être réduit à un seul deuxième équipement autorisé.

Un identifiant est par exemple une chaîne de caractères de longueur prédéterminée, générée par un processus pseudo-aléatoire et de longueur suffisante être unique.

Le deuxième équipement mémorise également son propre identifiant IDⱼ, qu'il envoie au premier équipement pour vérification. Si l'identifiant IDⱼ appartient à l'ensemble d'identifiants mémorisés dans le premier équipement, le canal de communication est mis en place.

Le premier équipement envoie ensuite au deuxième équipement le rapport de vérification, lors de l'étape de transmission 64.

A réception, le deuxième équipement analyse le rapport de vérification reçu à l'étape 66, et en fonction du résultat de la vérification, autorise ou interdit (étape 68) au terminal d'utilisateur 6 l'accès aux données mémorisées sur le dispositif portable 5.

Lorsque le résultat de la vérification est positif, en plus du rapport, le deuxième équipement crée (étape 70) un canal de communication avec le dispositif externe USB connecté au travers du canal sans fil. Le dispositif de stockage externe est présenté au terminal 6 comme faisant partie du système d'information.

Ainsi, dans ce cas, l'utilisateur obtient les données 34a, 34b, 34c du dispositif de stockage externe comme si ce dispositif de stockage externe était directement branché physiquement au terminal d'utilisateur 6.

Avantageusement, la sécurité est renforcée par la séparation physique entre le premier équipement qui reçoit le dispositif portable externe et le deuxième équipement qui est connecté physiquement au système informatique par l'intermédiaire du terminal d'utilisateur.

De plus, la sécurité est également renforcée par l'utilisation de modes de communication différents, ce qui nécessite une rupture de protocole de communication, typiquement entre la communication radio WiFi et la communication filaire USB.

De préférence, pour renforcer encore la sécurité, les premier et deuxième équipements implémentent un système d'exploitation différent du système d'exploitation du système informatique à protéger. Par exemple, lorsque le système informatique d'entreprise est un système fourni par Microsoft ^{®}, les premier et deuxième équipements implémentent un système de type Linux.

Enfin, il est plus aisé de mettre à jour les logiciels de vérification de sécurité embarqués sur chaque premier équipement que de mettre à jour chaque terminal d'utilisateur d'un réseau d'entreprise.

Un autre avantage est que le système de protection est portable, donc peut également être utilisé hors de l'enceinte d'une entreprise, par exemple par un utilisateur en déplacement professionnel, ou déplacé à l'intérieur d'une entreprise selon les besoins.

## Revendications

1. Système de protection (2) d'un système informatique comportant au moins un connecteur (40) permettant la connexion d'un dispositif (5) de stockage de données portable externe, **caractérisé en ce qu'**il comporte :
- un premier équipement (10) de protection portable comportant un connecteur d'entrée (20) adapté à recevoir ledit dispositif (5) de stockage de données portable,
- au moins un deuxième équipement (12) de protection portable comportant un processeur (36, 36A, 36B, 36C) et un connecteur de sortie (38) adapté à être connecté audit système informatique (4, 6),
lesdits premier (10) et deuxième (12) équipements étant adaptés à communiquer entre eux par un canal de communication radio (16),
le premier équipement (10) comportant en outre un module (30) de vérification de sécurité des données, adapté à exécuter au moins un logiciel de vérification de sécurité des données du dispositif (5) de stockage de données portable connecté en entrée dudit premier équipement (10) et à transmettre un rapport de vérification au deuxième équipement (12),
dans lequel suite à la réception d'un rapport de vérification, le processeur (36) du deuxième équipement (12) est adapté à vérifier si ledit rapport est positif, et dans ce cas uniquement, à fournir audit système informatique (4, 6) un accès aux données (34a, 34b, 34c) stockées sur ledit dispositif (5) de stockage de données externe.

2. Système selon la revendication 1, dans lequel l'accès aux données stockées sur le dispositif de stockage de données externe est un accès direct, réalisé au travers d'un protocole spécifique d'accès à distance à un matériel connecté.

3. Système selon l'une des revendications 1 ou 2, dans lequel ledit deuxième équipement (12) est adapté à fournir ledit rapport de vérification au système informatique (4, 6).

4. Système selon l'une quelconque des revendications 1 à 3, dans lequel le premier équipement comprend un boîtier (10) et au moins un indicateur lumineux ou textuel disposé sur une des parois du boîtier, permettant d'indiquer, suite à la vérification de sécurité des données, si le rapport de vérification est positif ou négatif.

5. Système selon l'une quelconque des revendications 1 à 4, comportant une pluralité de deuxièmes équipements (12a, 12b, 12c), chacun des deuxièmes équipements (12a, 12b, 12c) étant adapté à communiquer avec ledit premier équipement (10) par un canal de communication radio (16a, 16b, 16c).

6. Procédé de protection d'un système informatique mis en œuvre dans un système de protection d'un système informatique conforme aux revendications 1 à 5, comportant au moins un connecteur permettant la connexion d'un dispositif de stockage de données portable externe, comportant un premier équipement de protection portable comportant un connecteur d'entrée adapté à recevoir ledit dispositif de stockage de données portable, et un deuxième équipement de protection portable comportant un connecteur de sortie adapté à être connecté audit système informatique,
**caractérisé en ce qu'**il comporte des étapes de :
- détection (52) de connexion d'un dispositif de stockage de données portable audit premier équipement,
- vérification (54) de sécurité des données, par exécution d'au moins un logiciel de vérification de sécurité des données du dispositif de stockage de données portable connecté en entrée dudit premier équipement, et génération (56) d'un rapport de vérification,
- transmission (64) d'un rapport de vérification au deuxième équipement de protection par un canal de communication radio,
- en cas de vérification de sécurité des données positive, fourniture (70) audit système informatique d'un accès aux données stockées sur ledit dispositif de stockage de données externe.

7. Procédé selon la revendication 6, dans lequel l'étape de vérification met en œuvre une pluralité de logiciels de vérification de sécurité.

8. Procédé selon l'une des revendications 6 ou 7, comprenant en outre une étape (58) de commande d'indicateur lumineux ou textuel permettant d'indiquer visuellement à un utilisateur le résultat positif ou négatif de la vérification.

9. Procédé selon l'une quelconque des revendications 6 à 8, comprenant en outre une étape d'établissement (60, 62) d'un canal de communication radio entre le premier équipement (10) et le deuxième équipement (12) selon un protocole de communication prédéterminé, comportant une étape d'appariement entre lesdits premier et deuxième équipements.

10. Procédé selon la revendication 9, dans lequel l'étape d'appariement met en œuvre une vérification de correspondance entre un identifiant unique associé au deuxième équipement et un identifiant préalablement mémorisé par le premier équipement.

## Patentansprüche

1. Schutzsystem (2) eines Computersystems, umfassend mindestens einen Verbinder (40), der die Verbindung einer externen tragbaren Datenspeichervorrichtung (5) ermöglicht, **dadurch gekennzeichnet, dass** es Folgendes umfasst:
- eine erste tragbare Schutzausrüstung (10), umfassend einen Eingangsverbinder (20), der angepasst ist, um die tragbare Datenspeichervorrichtung (5) aufzunehmen,
- mindestens eine zweite tragbare Schutzausrüstung (12), umfassend einen Prozessor (36, 36A, 36B, 36C) und einen Ausgangsverbinder (38), der angepasst ist, um mit dem Computersystem (4, 6) verbunden zu werden,
wobei die erste (10) und die zweite (12) Ausrüstung angepasst sind, um über einen Funkkommunikationskanal (16) miteinander zu kommunizieren,
wobei die erste Ausrüstung (10) ferner ein Datensicherheitsprüfmodul (30) umfasst, das angepasst ist, um mindestens eine Datensicherheitsprüfungssoftware der tragbaren Datenspeichervorrichtung (5) auszuführen, die als Eingang der ersten Ausrüstung (10) verbunden ist, und einen Prüfbericht an die zweite Ausrüstung (12) zu übertragen,
wobei nach dem Empfang eines Prüfberichts der Prozessor (36) der zweiten Ausrüstung (12) angepasst ist, um zu überprüfen, ob der Bericht positiv ist, und nur in diesem Fall dem Computersystem (4, 6) Zugang zu den Daten (34a, 34b, 34c) bereitzustellen, die auf der externen Datenspeichervorrichtung (5) gespeichert sind.

2. System nach Anspruch 1, wobei der Zugriff auf die auf dem externen Datenspeichergerät gespeicherten Daten ein direkter Zugriff ist, der über ein spezifisches Fernzugriffsprotokoll auf ein verbundenes Material erfolgt.

3. System nach einem der Ansprüche 1 oder 2, wobei die zweite Ausrüstung (12) angepasst ist, um den Prüfbericht an das Computersystem (4, 6) bereitzustellen.

4. System nach einem der Ansprüche 1 bis 3, wobei die erste Ausrüstung ein Gehäuse (10) und mindestens einen Leucht- oder Textindikator umfasst, der an einer der Wände des Gehäuses angeordnet ist und es ermöglicht, nach der Datensicherheitsprüfung anzuzeigen, ob der Prüfbericht positiv oder negativ ist.

5. System nach einem der Ansprüche 1 bis 4, umfassend eine Vielzahl von zweiten Ausrüstungen (12a, 12b, 12c), wobei jede der zweiten Ausrüstungen (12a, 12b, 12c) angepasst ist, um über einen Funkkommunikationskanal (16a, 16b, 16c) mit der ersten Ausrüstung (10) zu kommunizieren.

6. Verfahren zum Schutz eines Computersystems, das in einem Schutzsystem eines Computersystems gemäß den Ansprüchen 1 bis 5 implementiert ist, umfassend mindestens einen Verbinder, der die Verbindung einer externen tragbaren Datenspeichervorrichtung ermöglicht, umfassend eine erste tragbare Schutzausrüstung, umfassend einen Eingangsverbinder, der angepasst ist, um die tragbare Datenspeichervorrichtung aufzunehmen, und eine zweite tragbare Schutzausrüstung, umfassend einen Ausgangsverbinder, der angepasst ist, um mit dem Computersystem verbunden zu werden,
**dadurch gekennzeichnet, dass** es die folgenden Schritte umfasst:
- Erkennen (52) einer Verbindung einer tragbaren Datenspeichervorrichtung mit der ersten Ausrüstung,
- Verifizieren (54) der Datensicherheit durch Ausführen von mindestens einer Datensicherheitsprüfungssoftware der tragbaren Datenspeichervorrichtung, die mit dem Eingang der ersten Ausrüstung verbunden ist, und Erstellen (56) eines Prüfberichts,
- Übertragen (64) eines Prüfberichts über einen Funkkommunikationskanal an die zweite Schutzausrüstung,
- im Falle einer positiven Datensicherheitsprüfung, Bereitstellen (70) eines Zugriffs auf die auf der externen Datenspeichervorrichtung gespeicherten Daten für das Computersystem.

7. Verfahren nach Anspruch 6, wobei der Überprüfungsschritt eine Vielzahl von Sicherheitsüberprüfungssoftware implementiert.

8. Verfahren nach einem der Ansprüche 6 oder 7, ferner umfassend einen Schritt (58) zum Steuern eines Leucht- oder Textindikators, der es ermöglicht, einem Benutzer das positive oder negative Resultat der Überprüfung visuell anzuzeigen.

9. Verfahren nach einem der Ansprüche 6 bis 8, ferner umfassend einen Schritt zum Aufbauen (60, 62) eines Funkkommunikationskanals zwischen der ersten Ausrüstung (10) und der zweiten Ausrüstung (12) gemäß einem vorbestimmten Kommunikationsprotokoll, umfassend einen Schritt zur Paarung zwischen der ersten und der zweiten Ausrüstung.

10. Verfahren nach Anspruch 9, wobei der Paarungsschritt eine Überprüfung der Übereinstimmung zwischen einer eindeutigen Kennung, die mit der zweiten Ausrüstung assoziiert ist, und einer Kennung, die zuvor von der ersten Ausrüstung gespeichert wurde, implementiert.

## Claims

1. A protection system (2) for a computer system comprising at least one connector (40) allowing the connection of an external portable data storage device (5), **characterised in that** it comprises:
- a first portable protective equipment (10) having an input connector (20) adapted to receive said portable data storage device (5),
- at least one second portable protection device (12) comprising a processor (36, 36A, 36B, 36C) and an output connector (38) adapted to be connected to said computer system (4, 6),
said first (10) and second (12) equipment being adapted to communicate with each other via a radio communication channel (16),
the first equipment (10) further comprising a data security verification module (30), adapted to execute at least one data security verification software of the portable data storage device (5) connected to the input of said first equipment (10) and to transmit a verification report to the second equipment (12),
wherein following receipt of a verification report, the processor (36) of the second equipment (12) is adapted to verify whether said report is positive, and in this case only, to provide said computer system (4, 6) with access to data (34a, 34b, 34c) stored on said external data storage device (5).

2. The system according to claim 1, wherein the access to the data stored on the external data storage device is direct access, performed through a specific remote access protocol to a connected hardware.

3. The system according to one of claims 1 or 2, wherein said second equipment (12) is adapted to provide said verification report to the computer system (4, 6).

4. The system according to any of claims 1 to 3, wherein the first equipment comprises a housing (10) and at least one illuminated or text indicator disposed on one of the walls of the housing, making it possible to indicate, following the security verification of the data, whether the verification report is positive or negative.

5. The system according to any one of claims 1 to 4, comprising a plurality of second equipments (12a, 12b, 12c), each of the second equipments (12a, 12b, 12c) being adapted to communicate with said first equipment (10) via a radio communication channel (16a, 16b, 16c).

6. A method of protecting a computer system implemented in a system for protecting a computer system according to claims 1 to 5, comprising at least one connector for connecting an external portable data storage device, comprising a first portable protective equipment comprising an input connector adapted to receive said portable data storage device, and a second portable protective equipment comprising an output connector adapted to be connected to said computer system,
**characterised in that** it comprises the steps of:
- detecting (52) a connection of a portable data storage device to said first equipment,
- verifying (54) data security by running at least one data security verification software of the portable data storage device connected to the input of said first equipment, and generating (56) a verification report,
- transmitting (64) a verification report to the second protective equipment via a radio communication channel,
- in the event of a positive data security verification, providing (70) said computer system with access to the data stored on said external data storage device.

7. The method according to claim 6, wherein the verification step implements a plurality of security verification software programs.

8. The method according to one of claims 6 or 7, further comprising a step (58) of controlling an illuminated or text indicator to visually indicate to a user the positive or negative result of the verification.

9. The method according to any one of claims 6 to 8, further comprising a step of establishing (60, 62) a radio communication channel between the first equipment (10) and the second equipment (12) according to a predetermined communication protocol, comprising a matching step between said first and second equipment.

10. The method according to claim 9, wherein the matching step implements a correspondence check between a unique identifier associated with the second equipment and an identifier previously stored by the first equipment.
